# EUROPÄISCHE PATENTSCHRIFT

(11) **EP 1 389 559 B1**
(45) Veröffentlichungstag und Bekanntmachung des Hinweises auf die Patenterteilung: **04.01.2006**
(21) Anmeldenummer: 03017727.3
(22) Anmeldetag: 04.08.2003
(51) Int. Cl.: B60N 2/66, B60N 2/02

(54) **Kraftfahrzeugsitzsystem, Steuerungsvorrichtung, Betätigungsvorrichtung und Verfahren zur Steuerung einer Lordosenverstelleinrichtung eines Kraftfahrzeugsitzes**
Motor vehicle seat system, control device, actuator and method for controlling a lumbar adjustment device of a motor-vehicle seat
Système pour siège de véhicule automobile, dispositif de commande, dispositif d'actionnement et méthode de commande d'un dispositif de réglage lombaire d'un siège de véhicule

(30) Priorität: 07.08.2002 DE 20212142 U
(43) Veröffentlichungstag der Anmeldung: 18.02.2004
(73) Patentinhaber: Brose Fahrzeugteile GmbH & Co. KG, Coburg, 96450 Coburg (DE)
(72) Erfinder: Beloch, Klaus, 96247 Michelau (DE); Woller, Alexander, 97273 Kürnach (DE); Carl, Ingo, 97469 Gochsheim (DE); Forkel, Michael, 96450 Coburg (DE)
(74) Vertreter: Baumgärtel, Gunnar

(56) Entgegenhaltungen:
- DE-A- 19 961 172
- US-A- 4 655 505
- US-A- 5 243 267
- US-A- 5 523 664
- US-A- 5 697 672

## Beschreibung

Die Erfindung betrifft ein Kraftfahrzeugsitzsystem, eine Steuerungsvorrichtung, eine Betätigungsvorrichtung und ein Verfahren zur Steuerung einer Lordosenverstelleinrichtung eines Kraftfahrzeugsitzes.

Stützen von Kraftfahrzeugsitzen, welche entsprechend anatomischen Vorgaben geformt werden können, weisen einen stetig steigenden Einsatz auf. Neben Stützen, die eine im wesentlichen ein Druckmaximum vermeidende Haltung der Oberschenkel erlauben, sind die sogenannten Lordosenstützen von besonderer Bedeutung. Durch die bevorzugt nach vorne gebeugte Haltung von Sitzenden wird die naturgemäße, nach vorne gerichtete konkave Form der Wirbelsäule durch eine im wesentlichen konvex nach hinten gekrümmte ersetzt, wodurch neben einer schnelleren Ermüdung eine unerwünschte Verformung der Bandscheiben erfolgt. Um eine derartige unerwünschte Körperhaltung zu vermeiden, sind in Kraftfahrzeugsitzen Lordosenstützen vorgesehen. Derartige Lordosenstützen sollten höhenverstellbar ausgebildet werden, um den unterschiedlichen Rückenlängen und damit unterschiedlichen Höhen der Lordose angepasst zu sein. Üblicherweise sind derartige Lordosenstützen mit Polster des Kraftfahrzeugsitzes abgedeckt. Dieses Polster ist zu diesem Zwecke beispielsweise mit Schaumstoff gefüllt.

Es sind unterschiedlich technisch ausgebildete Lordosenstützen bekannt. Eine Form besteht im Vorsehen eines aufblasbaren Zylinders im Bereich der Lordose. Diese pneumatische Lordosenverstellung ist beispielsweise aus der US 4,655,505 bekannt. Mehrere Luftkammern können sequenziell über entsprechende Ventile angesteuert werden und der in den Luftkammern befindliche Druck kann mittels eines Ablassventils verringert oder durch ein Pumpenaggregat erhöht und mittels eines Drucksensors gemessen werden.

Eine weitere Lordosenstütze ist derart ausgebildet, dass zwei aneinander angelenkte Teile entlang einer Führung zueinander bzw. auseinander geschoben werden können. Eine variabel ausgebildete Krümmung ist nicht möglich, so dass eine Unterstützung der Lordose lediglich in einem engen Bereich der höchsten Stelle vorgesehen ist, womit lediglich ein oder zwei Wirbel unterstützt werden. Eine derartige Lordosenstütze ist beispielsweise in der WO 95/19123 beschrieben.

Eine weitere Ausführungsform von Lordosenstützen weist einen im wesentlichen flächigen Stützenteil auf, wobei die Fläche entweder Durchbrechungen besitzt oder einzelne nebeneinander angeordnete Stützelemente aufweist, die gegebenenfalls von der Mitte nach außen sich verjüngend ausgebildet sind. Dieser flächige Stützteil ist mit seinen beiden Endbereichen zueinander bewegbar, so dass eine Wölbung desselben erreichbar ist. Durch unterschiedliche Dickenausbildung gemäß EP 0 698 360 B kann eine erwünschte asymmetrische Form, die im wesentlichen einer Lordose entspricht, erreicht werden.

Oben angeführte Lordosenstützen sind in der Regel mit einem Rahmen, beispielsweise des Rückenteiles eines Autositzes, verbunden. Hierbei ist der Stützteil der Lordosenstütze beispielsweise mit einem weiteren Rahmen verbunden, der zwei äußere im wesentlichen parallel zur Wirbelsäule verlaufende Träger aufweist, entlang welcher Gleitelemente bewegbar sind bzw. an welchen Querträger für den wölbbaren Stützteil lagefixiert sind.

Aus der WO 95/19123 ist eine Lordosenstütze bekannt, die keinen wölbbaren Stützteil, sondern zwei aneinander angelenkte Schenkel aufweist. Die Enden der Schenkelteile sind gegeneinander bewegbar und die anderen Enden sind über eine zwei zylindrische Aufnahmen aufweisende Schiene verbunden.

Neben einer manuellen Verstellung derartiger Lordosenstützen, auch Lendenstützeinrichtungen oder Lumbalstütze genannt, sind elektrische oder pneumatisch verstellbare Lordosenverstelleinrichtungen bekannt, die eine elektrisch gesteuerte Einstellung der gewünschten Form ermöglichen. Diese elektrisch gesteuerten Verstellungen werden beispielsweise durch einen Taster oder Schalter bedient. Die Verstellung ist bei den genannten Lordosenstützen an die mechanische Ausgestaltung derselben gebunden.

Eine derartige elektrische Steuerung einer Lordosenverstelleinrichtung ist aus der DE 43 13 757 A1 und der US 5,243,267 bekannt. Diese ermöglicht neben der manuellen Ansteuerung der gewünschten Stützposition die Erzielung eines Massageeffekte, indem ein Motor wiederholt eine Vor- und Rückbewegung der Lumbalplatte innerhalb eines vorgegebenen Zeitraums periodisch bewirkt.

Der Erfindung liegt die Aufgabe zu Grunde ein Kraftfahrzeugsitzsystem, eine Steuerungsvorrichtung, eine Betätigungsvorrichtung und ein Verfahren zur Steuerung einer Lordosenverstelleinrichtung eines Kraftfahrzeugsitzes anzugeben, die möglichst verbesserte Komfortfunktionen bei einem einfachen mechanischen Aufbau aufzeigt.

Eine Lösungsmöglichkeit dieser Aufgabe wird durch das Verfahren mit den Merkmalen des Anspruchs 1, durch die Steuerungsvorrichtung mit den Merkmalen des Anspruch 14, durch die Betätigungsvorrichtung mit den Merkmalen des Anspruchs 18 und durch das Kraftfahrzeugsitzsystem mit den Merkmalen des Anspruchs 19 angegeben. Vorteilhafte Weiterbildungen der Erfindung sind den Unteransprüchen zu entnehmen.

Demgemäß ist ein Verfahren zur Steuerung einer Lordosenverstelleinrichtung eines Kraftfahrzeugsitzes vorgesehen. In dem Verfahren wird zugleich eine Antriebsbewegung in einer ersten Verstellrichtung und in einer zweiten Verstellrichtung automatisch gesteuert. Die automatische Steuerung erfolgt bevorzugt durch eine Steuerungsvorrichtung, beispielsweise mittels eines Programmablaufs, so dass eine permanente manuelle Steuerung, beispielsweise durch die Betätigung eines Bedienschalters unnötig ist. Die Lordosenverstelleinrichtung weist hierzu einen ersten Antrieb für eine Verstellung in einer ersten Verstellrichtung und einen zweiten Antrieb für eine Verstellung in einer zweiten Verstellrichtung auf. Prinzipiell können verschiedene Arten von Antrieben, wie pneumatische oder hydraulische verwendet werden, vorteilhafterweise werden jedoch elektromotorische Antriebe, besonders vorteilhafterweise elektrisch kommutierte Elektromotoren verwendet. Eine Verstellrichtung kann dabei eine beliebige, zum Beispiel bogenförmige, rotatorische oder eine entlang einer Verstellbahn zusammengesetzte Verstellmöglichkeit durch einen Antrieb sein. Bevorzugt wird jedoch jeweils eine linienförmige Verstellung durch einen Antrieb ermöglicht. Die Verstellrichtungen weichen voneinander ab. Demzufolge führt die Verstellung durch den ersten Antrieb zu einer anderen Veränderung der Lehnenkontur als die Verstellung durch den zweiten Antrieb.

Eine vorteilhafte Weiterbildung der Erfindung sieht vor, dass eine Verstellbewegung aus den Antriebsbewegungen in der ersten Verstellrichtung und der zweiten Verstellrichtung zusammengesetzt ist. Vorteilhafterweise ist hierzu die Lordosenstütze der Lordosenverstelleinrichtung zumindest in der Sitzlehnenhöhe durch den ersten Antrieb und in der Sitzlehnentiefe durch den zweiten Antrieb verstellbar. Die Stützposition ist in diesem Fall durch jeweilige aktuelle Verstellpositionen in der ersten Verstellrichtung und in der zweiten Verstellrichtung definiert. Die zusammengesetzte Verstellbewegung wird dabei erreicht, indem die Verstellung in der ersten Verstellrichtung der Verstellung in der zweiten Verstellrichtung zugeordnet wird. Im einfachsten Fall erfolgt die Zuordnung über die Verstellzeit, indem beispielsweise jedem Verstellzeitpunkt eine Verstellrichtung, eine Verstellgeschwindigkeit oder eine Verstellbeschleunigung dem jeweiligen Antrieb zugeordnet wird.

Eine bevorzugte Weiterbildung der Erfindung sieht zudem eine Abhängigkeit der Antriebsbewegungen als Zuordnung vor. Dabei wird die Antriebsbewegung des zweiten Antriebs in Abhängigkeit von einer ersten Verstellposition und/oder der zeitlichen Änderung dieser ersten Verstellposition gesteuert. Die Abhängigkeit kann dabei als feste Zuordnung programmierbar sein. Besonders vorteilhaft ist diese Abhängigkeit jedoch anhand von weiteren Bedingungen, insbesondere Parametern oder Kenngrößen veränderbar. Die zeitliche Änderung der Verstellposition ist vorteilhafterweise die VerstellGeschwindigkeit oder die Verstell-Beschleunigung des ersten Antriebs. Dient beispielsweise der zweite Antrieb zur Verstellung der Lordosenstütze in der Sitzlehnentiefe und der erste Antrieb zur Verstellung der Lordosenstütze in der Sitzlehnenhöhen wird die Sitzlehnentiefe in Abhängigkeit von der aktuellen Position der Sitzlehnenhöhe gesteuert.

Vorteilhafterweise wird in dem Verfahren zur Steuerung der Lordosenverstelleinrichtung die erste Verstellposition in der ersten Verstellrichtung ermittelt. Die Ermittlung der Verstellrichtung erfolgt bei einem elektrisch kommutierten Elektromotor als Antrieb bevorzugt mittels der Auswertung der Ansteuersignale. Wird ein mechanisch kommutierter Elektromotor als Antrieb verwendet, wird die Verstellposition vorteilhafterweise aus der durch die mechanische Kommutierung bedingten Welligkeit des Antriebsstroms ermittelt. Eine bevorzugte Ausgestaltung dieser Weiterbildung der Erfindung sieht vor, dass zur Ermittlung der Verstellposition diese mittels eines Sensorsystems sensiert wird. Dieses Positionssensorsystem ist mit dem Antrieb wirkverbunden, vorzugsweise mechanisch gekoppelt. Der Positionssensor ermöglicht dabei eine Abbildung der Verstellposition des mechanischen Verstellweges auf elektronisch auswertbare Signale, beispielsweise ein zu der Verstellposition korrelierendes Spannungssignal.

Das Sensorsystem kann beispielsweise die Antriebsbewegung des Elektromotors sensieren, indem an der Antriebsachse des Elektromotors ein Geber, beispielsweise ein mehrpoliger Ringmagnet, eine Lochscheibe oder ein kapazitiver Signalgeber befestigt ist, der mit dem Sensorelement, beispielsweise einem Hallsensor, einem optischen Bauelement oder dergleichen verbunden ist. Besonders vorteilhaft wird als Sensorsystem jedoch ein direktmessendes System verwendet, indem der Verstellweg mittels eines Sensors erfasst wird, aus dem zudem die jeweils aktuelle Verstellposition ausgelesen werden kann. Ein derartiges direktmessendes Sensorsystem ist beispielsweise ein über den Verstellweg veränderlicher Widerstand (Potentiometer, Schiebepotentiometer) oder besonders vorteilhafterweise ein sich über zumindest einen Teil des Verstellweges erstreckender Foliensensor.

In einer vorteilhaften Weiterbildung der Erfindung wird eine zweite Verstellposition in der zweiten Verstellrichtung ermittelt. Die Ermittlung der zweiten Verstellposition kann in der selben Weise wie die Ermittlung der ersten Verstellposition erfolgen. Dabei wird die Antriebsbewegung des ersten Antriebs vorzugsweise in Abhängigkeit von der zweiten Verstellposition und/oder der zeitlichen Änderung der zweiten Verstellposition gesteuert. Durch diese wechselseitige Abhängigkeit der Steuerung des jeweiligen Antriebs von der Verstellposition oder der zeitlichen Änderung dieser Verstellposition können verstellpositionsabhängige, freiprogrammierbare Bewegungsabläufe der Verstellung der Lordosenstütze gesteuert werden.

Eine besonders vorteilhafte Ausgestaltung der beiden vorhergehenden Weiterbildungen der Erfindung sieht vor, dass eine Zuordnungsvorschrift aus einem Speicher ausgelesen wird. Eine derartige Zuordnungsvorschrift ist beispielsweise eine Gleichung, die als Eingangsgröße die jeweilige ermittelte Verstellposition und/oder deren zeitliche Änderung einbezieht. Alternativ zu einer Gleichung oder einem sonstigen Algorithmus kann eine Zuordnungstabelle oder ein Zuordnungskennfeld dessen Zwischenwerte interpoliert werden, verwendet werden. Der Speicher ist beispielsweise ein fest programmierter nichtflüchtiger Speicher (ROM) oder ein programmierbarer Speicher (RAM/EEPROM), der eine Anpassung oder Variation der Zuordnungsvorschrift durch den Benutzer oder automatisch während des Betriebes ermöglicht.

Weiterhin wird aus der ermittelten Verstellposition und/oder der zeitlichen Änderung dieser Verstellposition mittels der Zuordnungsvorschrift eine Antriebssteuergröße zur abhängigen Steuerung des Antriebs ermittelt. Die Antriebssteuergröße ist beispielsweise das Tastverhältnis eines Puls-Weiten-Modulierten Signals (PWM) zur getakteten Bestromung des Elektromotors. Alternativ kann auch ein Spannungssignal oder die Drehfrequenz eines elektrisch kommutierten Motors ausgegeben werden.

Eine vorteilhafte Ausgestaltung der Erfindung sieht vor, dass eine Bewegungsrichtung und/oder eine Bewegungsgeschwindigkeit und/oder eine Bewegungsbeschleunigung des ersten Verstellantriebs einer Verstellposition und/oder einer zeitlichen Änderung der Verstellposition des zweiten Antriebs zugeordnet wird. Demzufolge kann die Zuordnungsvorschrift nicht nur die momentane Leistung des Motors, sondern auch deren zeitlichen Verlauf, wie Beschleunigungs- und Bremsvorgänge etc. steuern.

Durch eine programmierbare Recheneinheit, vorzugsweise ein Mikrocontroller können verschiedene Bewegungseigenschaften gesteuert werden. Um zudem eine differenziertere Auswertung der Bewegung zu ermöglichen, sind zumindest drei vorteilhafte Ausgestaltungen, die zudem kombiniert werden können, einsetzbar.

In der ersten dieser Ausgestaltungen ist mittels der programmierbaren Recheneinheit eine Bewegungsrichtung des ersten Verstellantriebs einer Position oder einer Verstellgeschwindigkeit oder einer Verstellbeschleunigung oder einer Kombination dieser des zweiten Verstellantriebs zuordenbar. Beispielsweise wird mit dem Erreichen einer oder mehrerer Positionen in der zweiten Verstellrichtung des zweiten Verstellantriebs die Bewegungsrichtung des ersten Verstellantriebs umgekehrt. Durch dieses Beispiel wird eine schlaufenförmige Gesamtbewegung der Lordosenverstelleinrichtung generiert, die eine oder mehrere ortfeste oder sich verschiebende Schlaufen aufweist.

Die zweite dieser Ausgestaltungen sieht eine derartige Anpassung der programmierbaren Recheneinheit vor, so dass eine Bewegungsgeschwindigkeit des ersten Verstellantriebs einer Position oder einer Verstellgeschwindigkeit oder einer Verstellbeschleunigung oder einer Kombination dieser des zweiten Verstellantriebs zuordenbar ist. Beispielsweise kann die Bewegungsgeschwindigkeit des ersten Verstellantriebs durch eine Steuerung des Antriebsstromes für einen mittleren Positionsbereich der zweiten Verstellrichtung reduziert oder verstärkt werden.

Neben der Steuerung der Bewegungsrichtung und der Bewegungsgeschwindigkeit des ersten Verstellantriebs ist zudem eine Abhängigkeit der Bewegungsbeschleunigung in einigen Fällen wünschenswert. Beispielsweise soll die Beschleunigung in der zweiten Verstellrichtung an die Beschleunigung in der ersten Verstellrichtung angepasst werden. Hierzu ist mittels der programmierbaren Recheneinheit eine Bewegungsbeschleunigung des ersten Verstellantriebs einer Position, einer Verstellgeschwindigkeit, einer Verstellbeschleunigung oder einer Kombination dieser des zweiten Verstellantriebs zuordenbar.

Neben der Verstellung der Lordosenstütze in der Sitzlehnentiefe und der Sitzlehnenhöhe ist in einer vorteilhaften Weiterbildung der Erfindung vorgesehen, dass die Lordosenverstelleinrichtung einen dritten Antrieb für ein Verstellung in einer zu der ersten und zweiten Verstellrichtung abweichenden dritten Verstellrichtung aufweist. Dabei wird die Antriebsbewegung des dritten Antriebs in Abhängigkeit von der Verstellposition und/oder der zeitlichen Änderung der Verstellposition der ersten Verstellrichtung und/oder der zweiten Verstellrichtung gesteuert. Über diese dritte Verstellrichtung lässt sich beispielsweise die Breite der Lordosenstütze oder deren Position innerhalb der Lehnenbreite steuern.

In einer besonders vorteilhaften Weiterbildung der Erfindung bildet zumindest die Antriebsbewegung in der ersten Verstellrichtung und die Antriebsbewegung in der zweiten Verstellrichtung eine Massagefigur. Die Massagefigur umfasst daher Verstellungen in der ersten Verstellrichtung und in der zweiten Verstellrichtung, die voneinander insbesondere durch eine Zuordnungsvorschrift abhängen. Weiterhin umfasst die Massagefigur die Geschwindigkeit in der die Massagefigur durchlaufen wird, sowie kurzzeitige Variationen der Verstellgeschwindigkeit eines oder beider Antriebe, die einen Massageeffekt bewirken. Die Massagefigur wird zur Massage für eine vorgebbare Zeitdauer durchlaufen wird. Die Vorgabe der Zeitdauer, der Massagefigur und Massageintensität kann dabei werksseitig oder besonders vorteilhaft durch den Benutzer erfolgen. Demzufolge kann die Dynamik, die Massagepausen, die Massageamplitude, die Massagebereiche oder dergleichen verändert werden.

In einer besonders vorteilhaften Ausgestaltung dieser Weiterbildung der Erfindung wird die Massagefigur in Abhängigkeit von einer oder mehreren Kenngrößen verändert. Eine derartige Kenngröße ist beispielsweise ein Einsitzgewicht, eine Massagezeit, eine Fahrtzeit, eine Fahrzeuggeschwindigkeit und deren zeitliche Änderung. Mittels einer Auswertung dieser Kenngrößen kann auf die Straßenverhältnisse, die Bewegung und Ermüdung des Sitzbenutzers geschlossen werden. Hierzu wird zudem vorteilhaft als Kenngröße eine Häufigkeit und ein Grad einer Betätigung des Lenkrades, ein Gaspedalbetätigungsweg, eine Kupplungspedalbetätigung, eine Schlechtwegstreckenerkennung, eine Fahrzeugtemperatur, eine Benutzeridentifikation beispielsweise anhand der Kennung des Kraftfahrzeugschlüssels, oder eine Betätigung einer Betätigungsvorrichtung ausgewertet.

Eine besonders vorteilhafte Weiterbildung der Erfindung sieht vor, dass aus mindestens einer Antriebsbewegung die auf den Antrieb wirkende Kraft ermittelt wird. Je nach Härte des Polsters und der Position des Sitzbenutzers, die sich während der Fahrt fortlaufend ändern kann, kann eine automatische Anpassung der Massagefigur oder des optimalen Stützpunktes der Lordosen wünschenswert sein. Zudem kann an Stellen an denen der Körper des Benutzers eine größere Kraft in die Sitzlehne einwirken lässt eine Verringerung oder Begrenzung der automatischen Verstellbewegung erwünscht sein. Hierzu wird in einer vorteilhaften Ausgestaltung dieser Weiterbildung der Erfindung aus der Ermittlung der auf den Antrieb wirkenden Kraft eine Rückenkontur des Sitzbenutzers bestimmt wird. Die Rückenkontur bietet dabei anatomische Eingangsdaten, die zu einer optimierten automatischen Einstellung der Lordosenstütze und korrespondierender Verstelleinrichtungen des Kraftfahrzeugsitzes, beispielsweise der Kopfstütze genutzt werden können. Demzufolge wird aus der Rückenkontur eine konturspezifische Verstellposition und/oder eine konturspezifische Massagefigur und/oder eine konturspezifische vorgebbare Zeitdauer der Massage bestimmt.

Weiterhin umfasst die Erfindung eine Steuerungsvorrichtung, die zur Steuerung einer Lordosenverstelleinrichtung nachdem zuvor beschriebenen Verfahren angepasst ist. Der Verstellweg der beiden Verstellrichtungen wird jeweils durch zwei mechanische Anschläge begrenzt, zwischen denen eine Verstellung mittels des Antriebes erfolgt. Der Verstellweg ist beispielsweise geradlinig mittels Führungselementen geführt. Alternativ kann auch eine bogenförmige oder komplexe Führungsbahn, ein rotatorischer Weg oder ein aus verschiedenen Bewegungsmögüchkeiten zusammengesetzter Verstellweg ausgebildet sein.

Zudem ist vorteilhafterweise ein erster Positionssensor zur Ermittlung einer Verstellposition innerhalb des Verstellweges vorgesehen. Die Steuerungsvorrichtung ermöglicht die Auswertung der sensierten Positionswerte und eine von dieser Auswertung abhängige Steuerung des Antriebes derart, dass das die Steuerungsvorrichtung zur Bewegungsumkehr der Verstellung des ersten Antriebs ausgebildet ist, wenn ein sensierter Positionswert einem, insbesondere einem mechanischen Anschlag zugeordneten Wendepunkt entspricht. Der Wendepunkt ist dabei ein Wert oder ein Wertebereich, dem die Bewegungsumkehr örtlich zugeordnet ist.

Die Steuerungsvorrichtung weist hierzu analoge, vorzugsweise jedoch digitale Bausteine, beispielsweise einen Mikrocontroller auf, der insbesondere in einem Programm den Ablauf eines Verfahren zur Steuerung der Verstellbewegung der Lordosenverstelleinrichtung des Kraftfahrzeugsitzes ermöglicht. Dabei wird das zu verstellende Element zwischen zwei mechanischen Anschlägen mittels des Antriebs verstellt. Um die mechanischen Anschläge zu schonen, werden dieselben durch das zu verstellende Element vorzugsweise gerade nicht erreicht.

Der zur Verstellposition korrelierende Positionswert des Positionssensors wird vorzugsweise fortlaufend ermittelt. Der Antrieb wird zur Umkehrung der Bewegungsrichtung gesteuert, wenn der ermittelte Positionswert einem vorgebbaren oder mittels eines Programm veränderbaren Wendepunkt entspricht. Wird dieser Wert oder ein Wert des Wertebereiches des Wendepunktes erreicht, erfolgt die automatische Steuerung der Bewegungsumkehr, indem der Antrieb in der vorherigen Bewegungsrichtung gestoppt wird und nachfolgend in die Gegenrichtung gesteuert wird. Vorzugsweise wird zwischen dem Stoppen und dem Verfahren des zu verstellenden Elementes in die Gegenrichtung der Antrieb für eine vorgebbare Zeitspanne abgeschalten.

Eine andere Ausprägung sieht eine Steuerungsvorrichtung einer Lordosenverstelleinrichtung eines Kraftfahrzeugsitzes vor, wobei die Verstelleinrichtung einen ersten Antrieb zur Verstellung in einer ersten Verstellrichtung und einen zweiten Antrieb zur Verstellung in einer zweiten Verstellrichtung aufweist. Dabei weichen die beiden Verstellrichtungen voneinander ab. Aufgrund dieser Abweichung und den zwei unabhängig steuerbaren Antrieben kann die Geometrie des Sitzes, insbesondere zeitabhängig gesteuert werden. Eine Verstellbewegung der Lordosenstütze ist dabei nicht auf eine geradlinige Verstellung beschränkt, auch bogenförmige, rotatorische oder zusammengesetzte Verstellbewegungen können gesteuert werden.

Ein erster Positionssensor dient zur Ermittlung einer ersten Verstellposition in der ersten Verstellrichtung. Der Positionssensor ist dabei mit dem ersten Antrieb wirkverbunden, so dass die Bewegung des zu verstellenden Elementes in der ersten Verstellrichtung oder alternativ die Antriebsbewegung des ersten Antriebs vorzugsweise fortlaufend auf einen Positionswert abgebildet werden. Dieser Positionswert wird durch ein elektronisches Steuerungsmittel der Steuerungsvorrichtung ausgewertet. Das Steuerungsmittel, insbesondere ein Mikrocontroller der Steuerungsvorrichtung ist dabei zur Steuerung der Antriebsbewegung des zweiten Antriebs in Abhängigkeit von dem ersten sensierten Positionswert und/oder einer Verstellgeschwindigkeit und/oder einer Beschleunigung des ersten Antriebs ausgebildet. Die Verstellbewegungen der ersten Verstellrichtung und der zweiten Verstellrichtung sind mittels der elektronischen Steuerungsvorrichtung elektrisch gekoppelt und vorzugsweise mechanisch voneinander unabhängig bewegbar.

Das elektronische Steuerungsmittel der Steuerungsvorrichtung ermöglicht dabei ein Verstellverfahren, das vorzugsweise für eine frei konfigurierbare Massagefunktion der Lordosenverstelleinrichtung genutzt wird. In dem Verfahren zur Steuerung der Lordosenverstelleinrichtung des Kraftfahrzeugsitzes sollen Bewegungsabhängigkeiten der unabhängig steuerbaren Antriebe definiert werden. Dabei wird das zu verstellende Element mit einem ersten Antrieb in einer ersten Verstellrichtung und mit einem zweiten Antrieb in einer zweiten Verstellrichtung verstellt. Die erste Verstellrichtung weicht von der zweiten Verstellrichtung ab. Eine erste Verstellposition in der ersten Verstellrichtung wird ermittelt. In Abhängigkeit von der ermittelten ersten Verstellposition oder einer ermittelten Verstellgeschwindigkeit in der ersten Verstellrichtung wird die Antriebsbewegung des zweiten Antriebs gesteuert. Die Antriebsbewegung kann beispielsweise in der Antriebsrichtung, in der Antriebsgeschwindigkeit oder der positiven oder negativen Antriebsbeschleunigung gesteuert werden.

Soll die Verstellfunktionalität der Lordosenverstelleinrichtung erweitert werden, wird in einer vorteilhaften Weiterbildung der Steuerungsvorrichtung ein dritter Antrieb zur Verstellung in einer dritten Verstellrichtung verwendet, die von der ersten Verstellrichtung und einer zweiten Verstellrichtung abweicht. Diese dritte Verstellrichtung ist beispielsweise eine rotatorische Verstellrichtung ϕ der Zylinderkoordinaten, die eine Kombination mit einer rotatorischen Bewegung ermöglicht. Dies kann vorteilhaft für eine durch die Steuerungsvorrichtung gesteuerte rotatorische Massagefunktion genutzt werden. Alternativ kann sich die dritte Verstellrichtung auch über die Sitzbreite erstrecken.

Um die Abhängigkeiten der Verstellbewegungen an den Benutzer und die mechanische Konstruktion des Kraftfahrzeugsitzes anzupassen, ist in einer besonders vorteilhaften Weiterbildung der Erfindung eine programmierbare Recheneinheit des Steuerungsvorrichtung vorgesehen, die zumindest zur frei programmierbaren Abhängigkeit einer Verstellbewegung der ersten Verstellrichtung von einer Verstellbewegung der zweiten Verstellrichtung ausgebildet und angepasst ist. Demzufolge ist besonders vorteilhaft die Recheneinheit der Steuerungsvorrichtung programmierbar und zumindest eine Massagefigur programmierbar und speicherbar. Zudem können zusätzlich weitere Abhängigkeiten programmiert werden. So ist beispielsweise auch die zweite Verstellbewegung zusätzlich von der ersten Verstellbewegung oder einer weiteren Verstellbewegung der Lordosenverstelleinrichtung oder einer anderen Verstelleinrichtung des Kraftfahrzeugsitzes abhängig. Aufgrund der Programmierbarkeit sind vorteilhafterweise mehrere der Massagefiguren durch den Benutzer veränderbar und speicherbar. Die Massagefigur entspricht dabei einer programmierbaren Bewegung der Lordosenverstelleinrichtung. Die Massagefiguren können an die Umgebungsbedingungen des Kraftfahrzeugsitzes, also beispielsweise die Härte des Polsters angepasst werden.

Zudem ist vorteilhafterweise vorgesehen, dass die Massagefigur in Abhängigkeit von einer Kenngröße variiert wird. Diese Kenngröße ist beispielsweise eine Messgröße wie das Einsitzgewicht oder eine Steuergröße oder eine Businformation, wie die Fahrzeitdauer.

Um den Komfort dieser Massage zu verbessern und die durch den Benutzer bevorzugte Massage von den Wünschen des Benutzers abhängig zu machen, weist eine vorteilhafte Weiterbildung der Erfindung eine Eingabevorrichtung zum manuellen Starten eines programmierbaren Verstellbewegungsablaufes der Lordosenverstelleinrichtung auf. Neben dem Starten kann auch eine Abschaltung der Massagefunktion durch die Eingabevorrichtung ermöglicht werden. Die Eingabevorrichtung ist dabei vorteilhafterweise in das Sitzsteuergerät, das zum Steuern der Sitzpositionen dient, integriert.

Unterschiedliche Benutzer des Kraftfahrzeugsitzes können unterschiedliche Ausprägungen der Massageart bevorzugen. Um dem Rechnung zu tragen, ist in einer vorteilhaften Ausgestaltung der Erfindung mittels der Eingabevorrichtung zumindest eine von unterschiedlichen Massagefiguren auswählbar. Vorzugsweise sind die auswählbaren Massagefiguren konfigurierbar, indem die Massagefiguren durch den Benutzer veränderbar und speicherbar sind. Zudem können diese Massagefiguren einer Benutzeridentifikation, die beispielsweise auf einem Fahrzeugschlüssel gespeichert ist, zugeordnet werden.

Um ein sanfteres Verhalten der Lordosenverstelleinrichtung nahe den Bewegungsbegrenzungen durch die Anschläge zu ermöglichen, ist in einer vorteilhaften Ausgestaltung der Erfindung die Steuerungsvorrichtung zum Bremsen des ersten Antriebs und zum Beschleunigen des ersten Antriebs in die Umkehrrichtung ausgebildet und angepasst, wenn der sensierte Positionswert den Wendepunkte erreicht. Hierzu ist vorteilhafterweise ein Halbleiterschalter, beispielsweise ein Feldeffekttransistor oder eine Vollbrücke vorgesehen, die beispielsweise mittels eines pulsweitenmodulierten Steuersignals eines Mikrocontrollers ansteuerbar ist und die Antriebsenergie steuert oder regelt.

Eine vorteilhafte Verfahrensabfolge in einem Steuerungsprogamm ermöglicht einen fortlaufenden Vergleich zwischen dem aktuellen sensiserten Pösitionswert und einem oder mehreren dem Wendepunkt zugeordneten Werten. Ergibt der Vergleich ein positives Ergebnis, reagiert das Steuerungsmittel auf das Erreichen des Wendepunktes. Hierzu wird die Antriebsspannung und/oder der Antriebsstrom mittels einer Rampe oder einer sonstigen fallenden Funktion gesteuert bis der Antrieb einen Stillstand erreicht. Nachfolgend wird der Antrieb in die Gegenrichtung betrieben und die Antriebsspannung und/oder der Antriebsstrom mittels einer steigenden Funktion bis zu einem Sollwert "hoch"-gesteuert. Beim Erreichen des Wendepunktes nach dem Stillstand aus der Richtung des zugehörigen Anschlages erfolgt keine Richtungsumkehr, jedoch ist eine andere abhängige Steuerung, wie eine Geschwindigkeitssteuerung, in Abhängigkeit von diesem Wendepunkt möglich.

Vorteilhafterweise ist vorgesehen, dass zumindest ein Wendepunkt als Positionswert innerhalb eines Verstellweges zwischen zwei mechanischen Anschlägen angeordnet und zu einem der mechanischen Anschläge derart positioniert ist, dass die Verstellbewegung zu einer auf den mechanischen Anschlag wirkenden Bewegungsenergie unterhalb der Belastungsgrenze dieses mechanischen Anschlags führt, vorzugsweise vor dem Erreichen dieses mechanischen Anschlags gestoppt ist. Alternativ zu dieser direkt benachbarten Anordnung des Wendepunktes zu einem der Anschläge kann der Wendepunkt auch von dem Anschlag distanziert angeordnet sein, wenn für die Wendepunktfunktion eine Einschränkung des Verstellweges gewünscht ist. Vorzugsweise sind die Steuerungsmittel dabei derart ausgebildet, dass der Wendepunkt in Doppelfunktion als Schutzstop wirkt, wobei bei einer manuellen oder automatischen Verstellung der Schutzstop in Abhängigkeit von der bestimmten Verstellposition eine automatische Reduktion der Verstellenergie, insbesondere ein Stoppen der Verstellbewegung im Bereich dieses als Schutzstop wirkenden Wendepunktes ermöglicht.

Um eine automatische Verstellung in die gewünschte Position zu ermöglichen sind in einer vorteilhaften Ausgestaltung der Erfindung Mittel zur Speicherung und Auswahl von einer oder mehrerer Memorypositionen vorgesehen. Anhand der Memorypositionsdaten kann die Massagefunktion vorteilhaft an die der Körperform des Benutzers zugeordnete Memoryposition angepasst werden.

Soll der Verstellweg durch den Benutzer oder anhand weiterer Berechnungen begrenzt werden, ist in einer vorteilhaften Weiterbildung der Erfindung der Wendepunkt programmierbar, beispielsweise von Parametern abhängig oder als fester Wert in einem Speicher gespeichert.

Endlagenschaltern können als Positionssensoren grundsätzlich eingesetzt werden, jedoch ermöglichen diese Endlagenschalter weder eine Ansteuerung einer Memoryposition noch eine Messung der Verstellgeschwindigkeit. Um diese Komfortfunktionen zur Verfügung zu stellen, ist besonders vorteilhaft die Verstellposition durch den Positionssensor direkt messbar, indem der Positionssensor mit dem zu verstellenden Element der Lordosenverstelleinrichtung mechanisch gekoppelt ist.

Als direkt messende Positionsensoren sind eine Vielzahl von Meßvorrichtungen einsetzbar. Jedoch weisen diese häufig eine hohen Verschleiß und damit eine geringe Zuverlässigkeit auf. Um dennoch die Position des zu verstellenden Elementes der Lordosenverstelleinrichtung direkt ermitteln zu können, ist in einer ersten von zwei vorteilhaften Ausgestaltungen der Erfindung der Positionsensor ein Folienpositionssensor, der ein von der Verstellposition entlang des Verstellweges abhängiges Positionssignal, vorzugsweise eine Sensorspannung ausgibt. In der zweiten der zwei vorteilhaften Ausgestaltungen der Erfindung ist der Positionsensor eine magnetoresistive Brückenschaltung, die mit einer über den Verstellweg variierenden magnetischen Polarisation zusammenwirkt.

Zur Sensierung der Position der Wendepunkte ist in einer alternativen Ausgestaltung der Erfindung der Positionssensor ein optoelektronisches Bauelement, das zur Sensierung des dem Wendepunkt zugeordneten Positionswerts ausgebildet ist. Hierzu wird beispielsweise das Prinzip einer Lichtschranke oder eine dem Wendepunkt zugeordnete Reflexion genutzt. Durch eine entsprechende Kopplung kann mittels einem optoelektronischen Bauelement zwei oder mehr Wendepunkte detektiert werden.

Eine besonders kostengünstige Ausgestaltung der Erfindung sieht als Positionssensor einen mit einem Magneten zusammenwirkender Hallsensor vor. Der Magnet ist beispielsweise mit dem zu verstellenden Teil der Lordosenverstelleinrichtung, vorzugsweise jedoch mit der Antriebsachse oder einem Getriebeelement des antreibenden Elektromotors des Antriebs mechanisch gekoppelt, beispielsweise an der Motorachse befestigt. Der von der Antriebsbewegung abhängige Wechsel von Nord- und Südpol des Magneten bewirkt eine Impulsfolge am Ausgang der Hallsensoren, die zur Positionszählung genutzt wird. Dabei ist die Steuerungsvorrichtung ausgebildet um diese wegabhängigen Impulse des Hallsensors zu zählen. Die aktuelle Verstellposition wird anhand der Zählung bestimmt. In Abhängigkeit von der bestimmten Verstellposition wird die Bewegung umgekehrt, wenn der Wendepunkt durch die bestimmte Verstellposition erreicht ist.

Diese indirekte Positionsbestimmung mittels Hallsensoren ist jedoch fehlerbehaftet, so daß die bestimmte Verstellposition zu der realen Verstellposition verschoben sein kann. Eine geringe Verschiebung ist zwar tolerierbar, jedoch führt die Verwendung der Massagefunktion der Lordosenverstelleinrichtung zu einer möglicherweise fortschreitenden Verschiebung, die zu einem wiederholten Verstellvorgang in die mechanischen Anschläge und damit zu einer erhöhten mechanischen Belastung der Lordosenverstelleinrichtung führen könnte.

Um die Steuerungsvorrichtung zu verbessern und diese Probleme zu vermeiden, weist die Steuerungsvorrichtung in einer besonders vorteilhaften Weiterbildung der kostengünstigen Ausgestaltung der Erfindung ein Korrekturmittel zur Korrektur der bestimmten Verstellposition auf. Hierzu kann eine detektierbare signifikante Position ermittelt werden und die Verschiebung zwischen der bestimmten Verstellposition und der realen Verstellposition korrigiert werden. Vorteilhafterweise sind hierzu Detektionsmittel zur Detektion einer Blockierung der Verstellung an einem der Anschläge vorgesehen.

Als Steuerungsverfahren ist folgende Ausgestaltung der Erfindung besonders vorteilhaft. In einem ersten Schritt wird die Verstelleinrichtung in die mechanischen Anschläge verfahren und die Position der mechanischen Anschläge, sowie deren Distanz ermittelt. Die nachfolgende Massageverstellung erfolgt abwechselnd bis zu den Wendepunkten, die zu dem zugeordneten mechanischen Anschlag distanziert -angeordnet sind und ein Verfahren in die Anschläge verhindern. Erfolgt während der Massageverstellung eine derartige Verschiebung, so daß die Distanz zwischen Wendepunkt und mechanischem Anschlag nicht mehr hinreichend ist und in den mechanischen Anschlag verfahren wird, wird der Anschlag anhand eine Antriebsstromcharakteristik detektiert, die für diesen Anschlag signifikant ist.

Nachfolgend wird entweder die bestimmte Verstellposition oder die Position der beiden Wendepunkte korrigiert. Um ein Verfahren in die Anschläge mit hoher mechanischer Energie, die zur Beschädigung der Mechanik führen könnte zu verhindern, erfolgt in einer vorteilhaften Ausgestaltung der Erfindung nach einer bestimmten, insbesondere konfigurierbaren Anzahl von Massagehüben, beispielsweise fünfzig Massagehüben, eine Korrektur der bestimmten Verstellposition oder der Wendepunkte, indem nach dem Erreichen eines Wendepunktes die Antriebsleistung heruntergesteuert wird und mit geringer Verstellenergie bis in den Anschlag verfahren wird. Dabei wird anhand der für den Anschlag signifikanten Antriebsstromcharakteristik die Position des Anschlags detektiert und die bestimmte Verstellposition oder die Wendepunkte entsprechend ausgerichtet. Neben einer einfachen Steuerung ist für die Massagefunktion auch eine Regelung der Geschwindigkeit oder des Drehmoments der Antriebe vorteilhaft.

Aufgrund der Vielzahl der möglichen Verstellrichtungen einer Lordosenverstelleinrichtung ist eine große Anzahl von Kabeln nötig, um die Antriebe der Lordosenverstelleinrichtung von dem Sitzsteuergerät aus zu steuern. Unter Vermeidung dieses Aufwandes sind in einer vorteilhaften Ausgestaltung der Erfindung Übertragungsmittel zur Kommunikation der Massagefunktion über ein Bussystem vorgesehen. Hierzu ist vorteilhafterweise die Steuerungsvorrichtung über einen LIN-Bus mit dem Sitzsteuergerät verbunden. Hierzu können auch fahrzeugübergreifende, benutzerspezifische Massagedaten aus einem Datenträger ausgelesen werden und über das Bussystem an die Steuerungsvorrichtung übertragen werden.

Ein anderer Aspekt der Erfindung ist eine Vorrichtung zur Betätigung von Funktionen einer Lordosenverstelleinrichtung mit einem oder mehreren Bedienelementen. Die Bedienelemente sind einer Verstellung in einer ersten Verstellrichtung und einer zweiten Verstelleinrichtung und einer Massagefunktion, die eine automatische Verstellbewegung in der ersten Verstellrichtung und in der zweiten Verstellrichtung umfasst, zugeordnet. Die Betätigungsvorrichtung kann dabei ein Teil einer eine Eingabevorrichtung zum manuellen Starten eines programmierbaren Verstellbewegungsablaufes der Lordose sein. Die Auswahl der gewünschten Funktionalität kann dabei auch mittels einer Spracheingabe erfolgen. Durch diese Vorrichtung ist zumindest eine von unterschiedlichen Massagefiguren auswählbar. Vorteilhafterweise weist diese Vorrichtung ein weiteres Bedienelement auf, mit dem die Massagefiguren durch den Benutzer veränderbar und speicherbar sind.

Die Lordose des Kraftfahrzeugsitzes und deren Steuerungsvorrichtung sind häufig an unterschiedlichen Stellen im Kraftfahrzeug angeordnet. Diese bilden durch ihre Wirkbeziehungen dabei ein Kraftfahrzeugsitzsystem mit einer Lordosenverstelleinrichtung, wobei die Lordosenstütze zumindest in der Sitzlehnentiefe und der Sitzlehnenhöhe verstellbar ist.

Die Erfindung umfasst neben den dargelegten Prinzipien und Mitteln auch die hierzu möglichen Funktionsumkehrungen und Substitutionen.

Im Folgenden wird die Erfindung anhand von Ausführungsbeispielen bezugnehmend auf zeichnerische Darstellungen näher erläutert.

Dabei zeigen
- FIG 1: eine schematische Darstellung der elektronischen Beschaltung einer mit einem Sitzsteuergerät verbundene Lordosenverstelleinrichtung,
- FIG 2: eine schematische Darstellung eines Kraftfahrzeugsitzes mit drei Verstellrichtungen der Lordosenverstelleinrichtung,
- FIG 3a und FIG 3b: eine schematische Darstellung einer Massagefigur,
- FIG 3c: ein schematisches Geschwindigkeits-Zeit-Diagramms zur Steuerung,
- FIG 4a und FIG 4b: eine Betätigungsvorrichtung mit Betätigungselementen, und
- FIG 5: eine Massagefigur mit überlagerter Massagefrequenz.

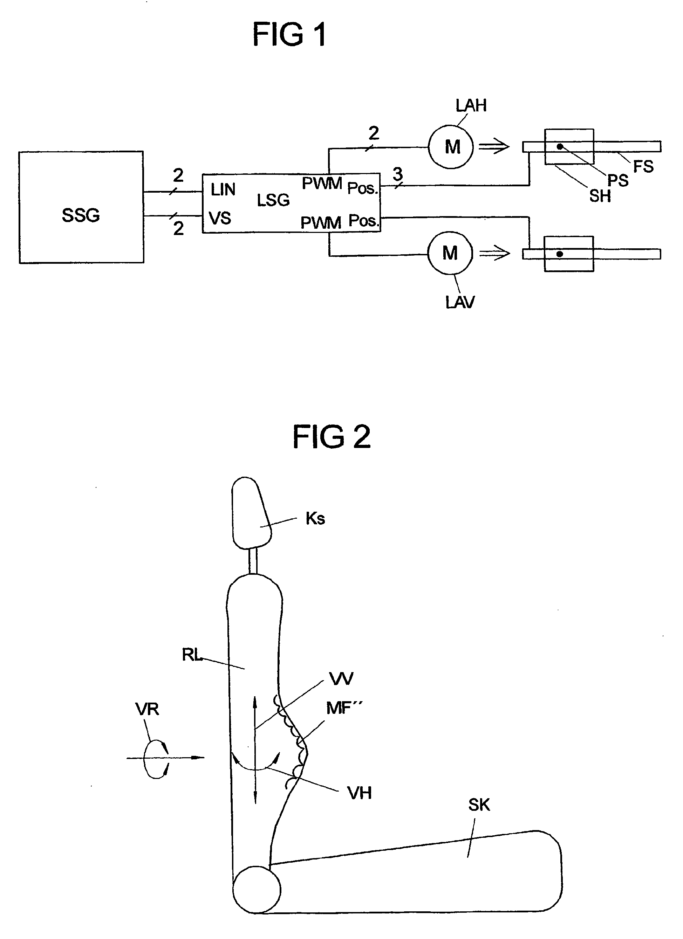

In der FIG 1 ist eine Steuerungsvorrichtung für eine Lordosenverstelleinrichtung schematisch dargestellt. Ein Lordosensteuergerät LSG ist mit einem Sitzsteuergerät SSG elektrisch verbunden. Über zwei Kabel wird das Lordosensteuergerät LSG mit der Versorgungsspannung VS versorgt. Zwei weitere Kabel sind zur Datenübertragung zwischen dem Sitzsteuergerät SSG und dem Lordosensteuergerät LSG vorgesehen. Zur Datenübertragung wird in diesem Ausführungsbeispiel der LIN-Bus vorteilhaft eingesetzt. Über den LIN-Bus können sowohl Funktionssteuerbefehle, als auch Statusdaten und Strommanagementfunktionen, sowie weitere Parameter oder Programme übertragen werden. So ist beispielsweise eine Programmierung von in den Folgefiguren dargestellten Massagefiguren (MF, MF' ,MF") über den LIN-Bus möglich.

Das Lordosensteuergerät LSG ist über zwei Treiberausgänge PWM mittels zweier Kabel mit jeweils einem Antrieb LAH und LAV der Lordosenverstelleinrichtung verbunden. Die Treiberausgänge PWM ermöglichen eine Pulsweitenmodulation des Antriebsstromes für die beiden Elektromotoren M und damit eine Steuerung des Drehmomentes und/oder der Drehgeschwindigkeit der Motoren. Die Antriebe LAH und LAV verstellen das zu verstellende Element der Lordosenverstelleinrichtung in zwei von einander abweichende Richtungen (VH und VV). Wie in FIG 2 dargestellt, ermöglicht dabei die Richtung VV eine Verstellbewegung in der Sitzlehnenhöhe, das heißt innerhalb der Rückenlehne RL in Richtung der Kopfstütze KS, während die Richtung VH im wesentlichen quer dazu ausgebildet sein kann, die Lordosenstütze dementsprechend im wesentlichen in der Sitzlehnentiefe verstellbar ist.

Um die Bewegung des zu verstellenden Elementes zu sensieren, werden Foliensensoren FS eingesetzt, die sich über den Verstellweg erstrecken und ein zur Verstellposition proportionales Spannungssignal an die Positionsdetektionseingänge Pos. des Lordosensteuergerätes LSG abgeben. Ein mit dem zu verstellenden Element der Lordosenverstelleinrichtung verbundener Schlitten SH weist einen Positionsstift PS auf, der auf die Folie drückt. An dieser Stelle erzeugt der Positionsstift PS innerhalb der Folien einen Kontakt zwischen einer Widerstandsschicht und einem Abgreiferelement. Der Druckpunkt bildet dabei die Position des zu verstellenden Elementes auf das Spannungssignal ab.

Die FIG 2 zeigt schematisch einen Kraftfahrzeugsitz mit einem Sitzkissen SK, einer Rückenlehne RL und einer Kopfstütze SK. Die Lordosenverstelleinrichtung ist in der Rückenlehne RL, in FIG 2 nicht dargestellt, angeordnet. Die Lordosenverstelleinrichtung weist in diesem Ausführungsbeispiel der Erfindung drei Verstellrichtungen VH, VV und VR auf. Die Verstellrichtung VV erstreckt sich in der Ebene der Rückenlehne RL und ermöglicht eine Verstellung entlang eines Teils der Länge der Wirbelsäule des Benutzers. Die Verstellrichtung VV ist dabei geradlinig ausgebildet.

Die Verstellrichtung VH weicht von der VerstellrichtungVV in dem Sinne ab, dass diese im Ausführungsbeispiel winkelig zu der Verstellrichtung VV ausgerichtet ist. Die Verstellrichtung VH ermöglicht die Ausprägung der Stützkonturhervorhebung durch die Lordosenstütze einzustellen. In dem dargestellten Ausführungsbeispiel erfolgt diese Verstellung entlang einer bogenförmigen Verstellbahn. Diese beiden und die folgende dritte Verstellrichtung VR sind dabei mechanisch unabhängig voneinander durch den jeweiligen Antrieb verstellbar. Doch sind die Verstellungen derart mit einander gekoppelt, dass diese Verstellrichtungen mit ein und demselben Stützelement der Lordosenverstelleinrichtung mechanisch verbunden sind.

Die dritte Verstellrichtung VR ist insbesondere für eine Massagefunktion ausgelegt. Sie ermöglicht eine kreisförmige, rotatorische Bewegung des zu verstellenden Stützelementes der Lordosenverstelleinrichtung. In Kombination mit den anderen beiden Verstellrichtungen VV und VH können komplexe Massagefiguren programmiert werden. Eine derartige komplexe Bewegung ist schematisch durch die Massagefigur MF" dargestellt, die auch in Abhängigkeit von der zuvor eingestellten Position oder einer Memoryposition konfigurierbar ist, so dass die Massagefigur der Kontur des Sitzes in der gewünschten Normalposition (vor und nach der Massage) angepasst ist.

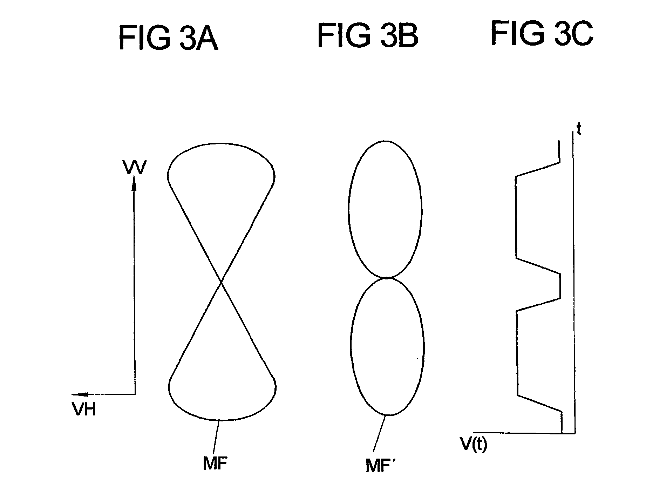

Die Figuren FIG 3a und FIG 3b zeigen weitere Massagefiguren MF und MF' für zwei Verstellrichtungen VH und VV. Diese Massagefiguren können innerhalb eines Wölbfeldes verschiedenste Ausgestaltungen, beispielsweise einer geschlossenen oder reversierenden Massagefigur annehmen. Die dargestellten Massagefiguren MF, MF' weisen die Form einer Acht (8) auf. Die Massagefigur MF weist zwischen zwei Bereiche, die den Wendepunkten zugeordnet sind einen Bereich mit im wesentlichen konstanter Verstellgeschwindigkeit in den Verstellrichtungen VH und VV auf. In den den Wendepunkten zugeordneten Bereichen wird die Verstellgeschwindigkeit dagegen heruntergesteuert. So wird die Geschwindigkeit in der Richtung VH in Abhängigkeit von der Verstellposition in der Verstellrichtung VV verändert, indem vor dem Erreichen eines Wendepunktes der jeweilige Antrieb abgebremst und nach einer Richtungsumkehrung wiederum beschleunigt wird.

Eine Steuerung der Geschwindigkeit erfolgt auch in FIG 3b. In der Verstellrichtung VV wird im Bereich der Wendepunkte die Geschwindigkeit heruntergesteuert. Zusätzlich erfolgt eine Verlangsamung der Geschwindigkeit etwa auf der Hälfte des Verstellweges in der Verstellrichtung VV. Die zur FIG 3b zugehörige Sollgeschwindigkeit V(t) in Abhängigkeit von der Zeit t ist in FIG 3c dargestellt. Mit Erreichen des Wendepunktes wird die zeit- oder ortsabhängige Steuerung wiederum zurückgesetzt. Die Steuerung in der Verstellrichtung VH erfolgt wiederum in Abhängigkeit von der sensierten Verstellposition in der Verstellrichtung VV.

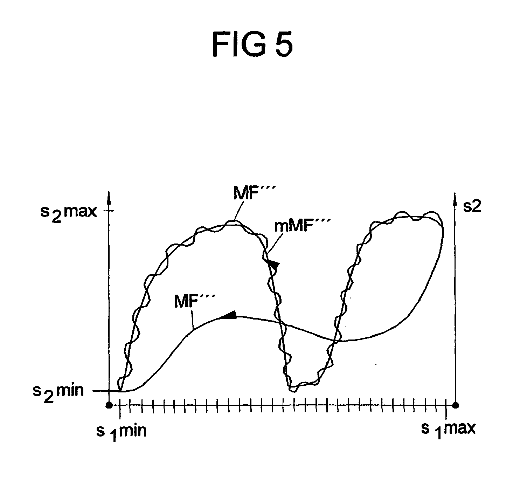

In der Figur 5 ist eine Massagefigur MF"' mit einer Grundfigur mMF"', die von einer Massagefrequenz überlagert wird, schematisch dargestellt. Auf der Ordinate ist der Verstellweg s1 in der ersten Verstellrichtung des ersten Antriebs LAV aufgetragen. Der Verstellweg s1 wird durch die beiden Wendepunkte s1min und s1max begrenzt. Auf der Abszisse ist der Verstellweg s2 in der zweiten Verstellrichtung des zweiten Antriebs LAH aufgetragen. Dieser ist ebenfalls durch zwei Wendepunkte s2min und s2max begrenzt. Diese Wendepunkte s1min, s1max, s2min und s2max können den beiden mechanischen Anschläge in der jeweiligen Verstellrichtung zugeordnet sein, jedoch kann durch den Benutzer der maximale Verstellweg in der jeweiligen Verstellrichtung zudem begrenzt werden, indem die Wendepunkte s1min, s1max, s2min und s2max derart zueinander versetzt werden, dass sich eine geringere automatische Verstelldistanz und demzufolge eine verkleinerter Massagebereich in der jeweiligen Verstellrichtung ergibt.

Die Massagefigur MF"' wird nun festgelegt, indem in einer als Zuordnungsvorschrift dienenden Tabelle dem jeweiligen Verstellpositionswert im Verstellweg s1 ein oder mehrere Verstellpositionswerte in dem Verstellweg s2 gespeichert sind. Welche Verstellpositionswert in dem Verstellweg s2 momentan ausgelesen werden muss hängt dabei von einer weiteren Kenngröße ab. In dem in Figur 5 dargestellten Beispiel hängt der aus Auszulesende Verstellpositionswert für den Verstellweg s2 von der momentanen Verstellbewegungsrichtung im Verstellweg s1 ab. Demzufolge unterscheiden sich wie in Figur 5 dargestellt der Hin- und Rückweg der Massagefigur MF"'. Auf dem Hinweg, also beginnen von dem Startpunkt s1 min, s2min bis zum Endpunkt s1max, s2max ist der Mittelwert mMF"' der Verstellung in der Massagefigur MF"' durch eine zusätzliche Schwingung überlagert. Diese überlagerte Schwingung, konstanter oder variabler Frequenz dient als zusätzlicher Massageeffekt und ist vorteilhafterweise eine periodische oder aperiodische Schwingung, eine Sinusschwingung, eine Rechteckschwingung oder eine mittels Fourierreihe definierte Vibration, die das mechanische System der Lordosenverstelleinrichtung weniger belastet.

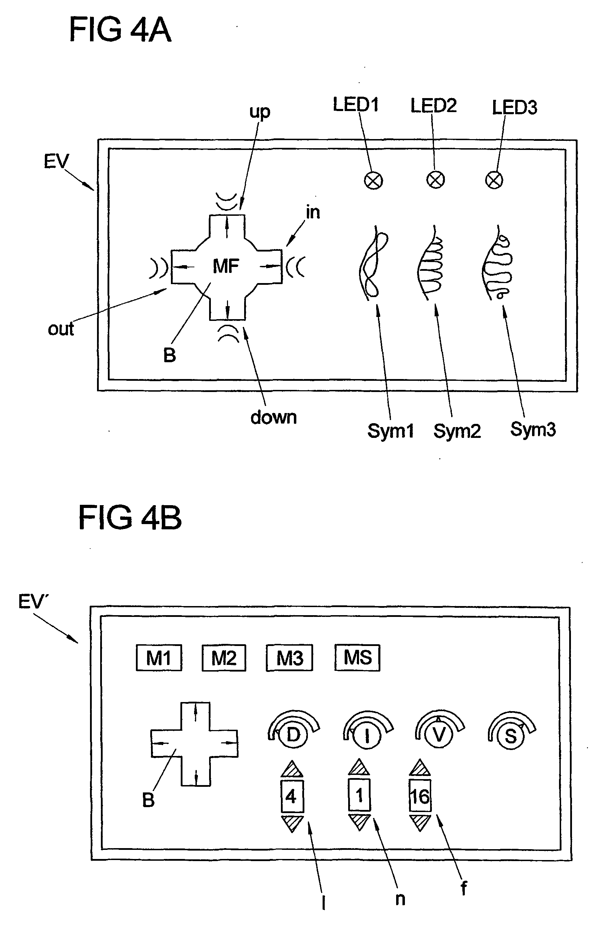

In den Figuren 4a und 4b sind Betätigungsvorrichtungen EV und EV' schematisch dargestellt. Dabei ist Figur 4a eine besonders einfache Ausführungsform, die lediglich ein Bedienelement B aufweist, in dem die möglichen Verstellungen "up", "down", "in" und "out" der Lordosenstütze und die Bedienungsfunktion für die Massagefiguren MF integriert ist. Zur Auswahl der Massagefiguren MF wird auf das Bedienelement B, das hierzu als Taster fungiert, gedrückt. Mit jeder Druckauswahl lässt sich eine der vorprogrammierten Massagefiguren MF auswählen, die durch eine jeweilige schematische Darstellung Sym1, Sym2 und Sym3 symbolisiert ist. Natürlich ist die Erfindung nicht auf die dargestellten Massagefiguren, noch auf deren Anzahl als begrenzt zu verstehen. Jedem Symbol Sym1, Sym2 und Sym3 ist in diesem Ausführungsbeispiel eine Anzeige LED1, LED2 und LED3 zugeordnet, die in diesem Ausführungsbeispiel als Leuchtdiode ausgebildet ist. Zur Anzeige einer aktiven Massagefunktion kann die Leuchtdiode hierzu in einen Blinkmodus übergehen. Desweiteren ermöglicht das Bedienelement B durch seitlichen oder von oben oder unten wirkenden Betätigungsdruck durch den Benutzer die manuelle Einstellung der gewünschten, ruhenden Sollposition der Lordosenstütze während der Nicht-Nutzung der Massagefunktion.

Die in Figur 4b dargestellte Betätigungsvorrichtung ermöglich neben dieser aus der Figur 4a bekannten manuellen Verstellung der gewünschten ruhenden Sollposition der Lordosenstütze eine Programmierung verschiedener Massagefunktionen durch den Benutzer und deren Speicherung. Zur Speicherung sind 3 Memorytasten M1, M2 und M3 und eine Speichertaste MS vorgesehen, die für 3 Benutzer des Kraftfahrzeugsitzes die Einspeicherung 3 unterschiedlicher Sollpositionen der Lordosenstütze und zugeordneter Massagefunktionen ermöglichen. Dabei ist jeweils ein Dynamikregler D, ein Intervallregler I, ein Vibrationsregler V und ein Geschwindigkeitsregler S vorgesehen. Mit dem Dynamikregler D lässt sich die Amplitude der Massage in Sitzlehnentiefe einstellen. Der Intervallregler I ermöglicht die Länge und zugehörige Pause der Massagefunktion einzustellen. Der Vibrationsregler V dient zur Regelung der Amplitude der überlagerten Schwingung aus Figur 5, während der Geschwindigkeitsregler S die Einstellung der Geschwindigkeit, in der eine Massagefigur MF durchlaufen wird, ermöglicht. Die weiteren Eingabeelemente e, n und f sind als "up/down" Tipptaster ausgebildet, wobei der zugehörige Wert durch eine mittige Dezimalanzeige angezeigt wird. Das Eingabeelement e dient dabei zur Einstellung der Anzahl der Schlaufen, Kreuzungspunkte oder Achten innerhalb der Massagefigur MF. Das Eingabeelement n ermöglicht dagegen die Einstellung der Anzahl der Durchläufe durch das gewünschte Wölbfeld. Weiterhin ermöglicht das Eingabeelement f die Einstellung der gewünschten Massagefrequenz durch den Benutzer, die bevorzugt der überlagerten Schwingung der Figur 5 zugeordnet ist.

Die Bedienelemente D, I, V, S, e, n und f können entweder wie in Figur 4b dargestellt einzeln ausgeführt sein, alternativ ist zudem die kostengünstige Variante der Integration das Bedienelement analog Figur 4a und der Verwendung einer Anzeige für die zugehörigen Funktionen D, I, V, S, e, n und f besonders vorteilhaft. Die Erfindung ist dabei nicht auf die dargestellten Ausführungsbeispiele, insbesondere der dargestellten Massagefiguren oder Anordnungen der Bedienelemente der Betätigungsvorrichtung begrenzt.

### Bezugszeichenliste

- SSG: Sitzsteuergerät
- LSG: Lordosensteuergerät
- LIN: LIN-Bus
- VS: Versorgungsspannung / Versorgungsstrom
- PWM: Pulsweitenmodulierte Steuerausgänge
- Pos.: Eingänge zur Positionsbestimmung
- M: Motor
- LAH: Antrieb für Verstellrichtung H (horizontal)
- LAV: Antrieb für Verstellrichtung V (vertikal)
- FS: Foliensensor
- PS: Positionsstift
- SH: Verstellschlitten
- VH: Verstellrichtung H
- VV: Verstellrichtung V
- VR: Verstellrichtung R
- MF, MF', MF", MF"': Massagefigur
- mMF"': Mittelwert der Position in der Massagefigur
- V(t): Sollgeschwindigkeit
- t: Zeit
- KS: Kopfstütze
- RL: Rückenlehne
- SK: Sitzunterstruktur, Sitzkissen
- s1: Verstellposition des ersten Antriebs (LAV)
- s2: Verstellposition des zweiten Antriebs (LAH)
- s1 min, s1max: Wendepunkt in der Verstellrichtung des ersten Antriebs (LAV)
- s2min, s2max: Wendepunkt in der Verstellrichtung des zweiten Antriebs (LAH)
- B: Multifunktionsschalter, Bedienelement
- EV, EV': Eingabevorrichtung, Betätigungsvorrichtung
- LED1, LED2, LED3: Anzeige, Leuchtdiode
- Sym1, Sym2, Sym3: Symbole für zugehörige Massagefigure
- M1, M2, M3: Memorytaste, Abruftaste
- MS: Schreibtaste, Speichertaste
- D: Dynamikregler
- I: Intervallregler
- V: Vibrationsregler
- S: Geschwindigkeitsregler
- e: Eingabeelement für eine Anzahl der Schlaufen im Wölbfeld
- n: Eingabeelement für eine Anzahl der Durchläufe durchs Wölbfeld
- f: Eingabeelement für die Eingabe der Massagefrequenz

## Patentansprüche

1. Verfahren zur Steuerung einer Lordosenverstelleinrichtung eines Kraftfahrzeugsitzes, wobei die Lordosenverstelleinrichtung
- einen ersten Antrieb für eine Verstellung in einer ersten Verstellrichtung und
- einen zweiten Antrieb für eine Verstellung in einer zweiten Verstellrichtung aufweist und die Verstellrichtungen voneinander abweichen,
**dadurch gekennzeichnet, dass**
zugleich eine Antriebsbewegung in der ersten Verstellrichtung und in der zweiten Verstellrichtung automatisch gesteuert wird.

2. Verfahren nach Anspruch 1,
**dadurch gekennzeichnet, dass**
eine Verstellbewegung aus den Antriebsbewegungen in der ersten Verstellrichtung und der zweiten Verstellrichtung zusammengesetzt ist, indem
die Verstellung in der ersten Verstellrichtung der Verstellung in der zweiten Verstellrichtung zugeordnet wird.

3. Verfahren zur Steuerung einer Lordosenverstelleinrichtung eines Kraftfahrzeugsitzes, insbesondere nach einem der vorhergehenden Ansprüche, wobei die Lordosenverstelleinrichtung
- einen ersten Antrieb für eine Verstellung in einer ersten Verstellrichtung und
- einen zweiten Antrieb für eine Verstellung in einer zweiten Verstellrichtung aufweist und die Verstellrichtungen voneinander abweichen, wobei
- eine erste Verstellposition in der ersten Verstellrichtung ermittelt wird,
**dadurch gekennzeichnet, dass**
die Antriebsbewegung des zweiten Antriebs in Abhängigkeit von der ersten Verstellposition und/oder der zeitlichen Änderung der ersten Verstellposition gesteuert wird.

4. Verfahren nach einem der vorhergehenden Ansprüche,
**dadurch gekennzeichnet, dass**
eine zweite Verstellposition in der zweiten Verstellrichtung ermittelt wird, und
die Antriebsbewegung des ersten Antriebs insbesondere in Abhängigkeit von der zweiten Verstellposition und/oder der zeitlichen Änderung der zweiten Verstellposition gesteuert wird.

5. Verfahren nach einem der Ansprüche 3 oder 4,
**dadurch gekennzeichnet, dass**
eine Zuordnungsvorschrift aus einem Speicher ausgelesen wird, und
aus der ermittelten Verstellposition und/oder der zeitlichen Änderung dieser Verstellposition mittels der Zuordnungsvorschrift eine Antriebssteuergröße (PWM) zur abhängigen Steuerung des Antriebs ermittelt wird.

6. Verfahren nach einem der vorhergehenden Ansprüche,
**dadurch gekennzeichnet, dass**
eine Bewegungsrichtung und/oder eine Bewegungsgeschwindigkeit und/oder eine Bewegungsbeschleunigung des ersten Verstellantriebs einer Verstellposition und/oder einer zeitlichen Änderung der Verstellposition des zweiten Antriebs zugeordnet wird.

7. Verfahren nach einem der vorhergehenden Ansprüche,
**dadurch gekennzeichnet, dass**
die Lordosenverstelleinrichtung einen dritten Antrieb für eine Verstellung in einer von der ersten und zweiten Verstellrichtung abweichenden dritten Verstellrichtung aufweist, und
die Antriebsbewegung des dritten Antriebs in Abhängigkeit von der Verstellposition und/oder der zeitlichen Änderung der Verstellposition der ersten Verstellrichtung und/oder der zweiten Verstellrichtung gesteuert wird.

8. Verfahren nach einem der vorhergehenden Ansprüche,
**dadurch gekennzeichnet, dass**
die Antriebsbewegung in der ersten Verstellrichtung und die Antriebsbewegung in der zweiten Verstellrichtung eine Massagefigur bilden, die für eine vorgebbare Zeitdauer durchlaufen wird.

9. Verfahren nach Anspruch 8,
**dadurch gekennzeichnet, dass**
die Massagefigur in Abhängigkeit von einer oder mehreren Kenngrößen, insbesondere
- einem Einsitzgewicht,
- einer Massagezeit,
- einer Fahrtzeit,
- einer Fahrzeuggeschwindigkeit und deren zeitliche Änderung,
- einer Häufigkeit und ein Grad einer Betätigung des Lenkrades,
- einem Gaspedalbetätigungsweg,
- einer Kupplungspedalbetätigung,
- einer Schlechtwegstreckenerkennung,
- einer Fahrzeugtemperatur,
- einer Benutzeridentifikation,
- einer Betätigung einer Betätigungsvorrichtung,
verändert wird.

10. Verfahren nach einem der vorhergehenden Ansprüche,
**dadurch gekennzeichnet, dass**
aus mindestens einer Antriebsbewegung die auf den Antrieb wirkende Kraft ermittelt wird.

11. Verfahren nach Anspruch 10,
**dadurch gekennzeichnet, dass**
aus der Ermittlung der auf den Antrieb wirkenden Kraft eine Rückenkontur des Sitzbenutzers bestimmt wird.

12. Verfahren nach Anspruch 11,
**dadurch gekennzeichnet, dass**
aus der Rückenkontur eine konturspezifische Verstellposition und/oder eine konturspezifische Massagefigur und/oder eine konturspezifische vorgebbare Zeitdauer der Massage bestimmt wird.

13. Verfahren insbesondere nach einem der vorhergehenden Ansprüche zur Steuerung einer Lordosenverstelleinrichtung eines Kraftfahrzeugsitzes, wobei die Lordosenverstelleinrichtung
- einen ersten Antrieb für eine Verstellung in einer ersten Verstellrichtung und
- einen zweiten Antrieb für eine Verstellung in einer zweiten Verstellrichtung aufweist und die Verstellrichtungen voneinander abweichen,
**dadurch gekennzeichnet, dass**
die erste oder zweite Verstellrichtung in der Ebene der Rückenlehne liegt für eine Massagefunktion die Lordosenstütze entlang dieser Richtung verstellt wird, indem die Verstellbewegung in dieser Richtung in Abhängigkeit von gemessenen Positionswerten gesteuert wird.

14. Steuerungsvorrichtung eingerichtet zur Steuerung einer Lordosenverstelleinrichtung gemäß einem der vorhergehenden Ansprüche, welche die folgenden Elemente aufweist:
- eine Recheneinheit zur Durchführung des Verfahrens nach einem der vorhergehenden Ansprüche,
- Treiberelemente zur Steuerung der Antriebsenergie der Antriebe,
- Sensoren zur Ermittlung der Verstellposition und/oder der zeitlichen Änderung der Verstellposition und/oder
- eine Eingabevorrichtung.

15. Steuerungsvorrichtung nach Anspruch 14,
**dadurch gekennzeichnet, dass**
die Recheneinheit programmierbar und zumindest eine Massagefigur programmierbar und speicherbar ist.

16. Steuerungsvorrichtung nach Anspruch 15,
**dadurch gekennzeichnet, dass**
mehrere der Massagefiguren durch den Benutzer auswählbar, veränderbar und/oder speicherbar sind.

17. Steuerungsvorrichtung nach einem der Ansprüche 14 bis 16,
**gekennzeichnet durch**
Übertragungsmittel zur Kommunikation der Massagefunktion über ein Bussystem, insbesondere über einen LIN-Bus.

18. Vorrichtung zur Betätigung von Funktionen einer Lordosenverstelleinrichtung mit einem oder mehreren Bedienelementen, die
- einer Verstellung in einer ersten Verstellrichtung und einer zweiten Verstelleinrichtung und
- einer Massagefunktion, die eine automatische Verstellbewegung in der ersten Verstellrichtung und in der zweiten Verstellrichtung umfasst,
zugeordnet sind.

19. Kraftfahrzeugsitzsystem mit
- einer Lordosenverstelleinrichtung, wobei die Lordosenstütze zumindest in der Sitzlehnentiefe und der Sitzlehnenhöhe verstellbar ist, und
- einer Steuerungsvorrichtung zumindest nach einem der Ansprüche 14 bis 17.

## Claims

1. Method for controlling a lumbar support adjusting device in a motor vehicle seat in which the lumbar support adjusting device has
- a first drive for adjustment in a first adjusting direction and
- a second drive for adjustment in a second adjusting direction and the adjusting directions deviate from each other
**characterised in that**
a drive movement in the first adjusting direction and in the second adjusting direction is automatically controlled at the same time.

2. Method according to claim 1,
**characterised in that**
an adjusting movement is comprised of the drive movements in the first adjusting direction and the second adjusting direction wherein the adjustment in the first adjusting direction is associated with the adjustment in the second adjusting direction.

3. Method for controlling a lumbar support adjusting device in a motor vehicle seat, more particularly according to one of the preceding claims wherein the lumbar support adjusting device has
- a first drive for adjustment in a first adjusting direction and
- a second drive for an adjustment in a second adjusting direction and the adjusting directions deviate from each other wherein
- a first adjusting position is determined in the first adjusting direction,
**characterised in that**
the drive movement of the second drive is controlled in dependence on the first adjusting position and/or time change in the first adjusting position.

4. Method according to one of the preceding claims,
**characterised in that**
a second adjusting position is determined in the second adjusting direction and the drive movement of the first drive is controlled in particular in dependence on the second adjusting position and/or time change of the second adjusting position.

5. Method according to one of claims 3 or 4,
**characterised in that**
a set of coordinates is retrieved from a memory, and a drive control value (PWM) for the dependent control of the drive is determined from the determined adjusting position and/or time change of this adjusting position by means of the coordinates.

6. Method according to one of the preceding claims,
**characterised in that**
a movement direction and/or movement speed and/or movement acceleration of the first adjusting drive is assigned to an adjusting position and/or a time change of the adjusting position of the second drive.

7. Method according to one of the preceding claims,
**characterised in that**
the lumbar support adjusting device has a third drive for an adjustment in a third adjusting direction which differs from the first and second adjusting directions, and the drive movement of the third drive is controlled in dependence on the adjusting position and/or time change of the adjusting position of the first adjusting direction and/or second adjusting direction.

8. Method according to one of the preceding claims,
**characterised in that**
the drive movement in the first adjusting direction and the drive movement in the second adjusting direction form a massage figure which is run through for a predeterminable period of time.

9. Method according to claim 8,
**characterised in that**
the massage figure is altered in dependence on one or more characteristic values, more particularly
- an occupied weight,
- a massage time
- a travel time
- a vehicle speed and its transitory change
- a frequency and degree of actuation of the steering wheel
- an accelerator pedal actuation path
- a clutch pedal actuation
- a recognition of a poor road stretch
- a vehicle temperature
- a user identification
- an actuation of an actuating device.

10. Method according to one of the preceding claims,
**characterised in that**
the force acting on the drive is determined from at least one drive movement.

11. Method according to claim 10,
**characterised in that**
a back contour of the seat user is ascertained from determining the force acting on the drive.

12. Method according to claim 11,
**characterised in that**
a contour-specific adjusted position and/or contour-specific massage figure and/or contour-specific predeterminable time duration of the massage is determined from the back contour.

13. Method more particularly according to one of the preceding claims for controlling a lumbar support adjusting device in a motor vehicle seat wherein the lumbar support adjusting device has
- a first drive for adjustment in a first adjusting direction and
- a second drive for adjustment in a second adjusting direction and the adjusting directions deviate from each other,
**characterised in that**
the first or second adjusting direction lie in the plane of the backrest and for a massage function the lumbar support is moved along this direction in that the adjusting movement is controlled in this direction in dependence on the measured position values.

14. Control device set up for controlling a lumbar support adjusting device according to one of the preceding claims which has the following elements:
- a computer unit for carrying out the method according to one of the preceding claims,
- drive elements for controlling the drive energy of the drives,
- sensors for determining the adjusted position and/or the transitory change of the adjusted position and/or
- an input device.

15. Control device according to claim 14,
**characterised in that**
the computer unit is programmable and at least one massage figure is able to be programmed and memorised.

16. Control device according to claim 15,
**characterised in that**
several of the massage figures can be selected, changed and/or stored by the user.

17. Control device according to one of the claims 14 to 16,
**characterised by**
transfer means for communicating the massage function through a bus system more particularly through a LIN bus.

18. Device for actuating functions of a lumbar support adjusting device with one or more operating elements which are allocated to
- an adjustment in a first adjusting direction and a second adjusting direction, and
- a massage function which comprises an automatic adjusting movement in the first adjusting direction and in the second adjusting direction.

19. Motor vehicle seat system with
- a lumbar support adjusting device wherein the lumbar support can be adjusted at least in the depth and height of the seat back and
- a control device at least according to one of claims 14 to 17.

## Revendications

1. Procédé pour commander un dispositif de réglage lombaire d'un siège de véhicule automobile, dans lequel le dispositif de réglage lombaire comprend :
- un premier entraînement pour un réglage dans une première direction de réglage, et
- un second entraînement pour un réglage dans une seconde direction de réglage,
les directions de réglage se distinguant l'une de l'autre,
**caractérisé en ce que** :
un mouvement d'entraînement est commandé automatiquement et simultanément dans la première direction de réglage et dans la seconde direction de réglage.

2. Procédé selon la revendication 1, **caractérisé en ce qu'**un mouvement de réglage est composé par les mouvements d'entraînement dans la première direction de réglage et dans la seconde direction de réglage, du fait que le réglage dans la première direction est associé au réglage dans la seconde direction de réglage.

3. Procédé pour commander un dispositif de réglage lombaire d'un siège de véhicule automobile, en particulier selon l'une des revendications précédentes, dans lequel le dispositif de réglage lombaire comprend :
- un premier entraînement pour un réglage dans une première direction de réglage, et
- un second entraînement pour un réglage dans une seconde direction de réglage,
les directions de réglage se distinguant l'une de l'autre, et
- une première position de réglage étant déterminée dans la première direction de réglage,
**caractérisé en ce que** :
le mouvement d'entraînement du second entraînement est commandé en fonction de la première position de réglage et/ou de la modification temporelle de la première position de réglage.

4. Procédé selon l'une des revendications précédentes, **caractérisé en ce qu'**une seconde position de réglage est déterminée dans la seconde direction de réglage, et le mouvement d'entraînement du premier entraînement est commandé en particulier en fonction de la seconde position de réglage et/ou de la modification temporelle de la seconde position de réglage.

5. Procédé selon l'une des revendications 3 ou 4, **caractérisé en ce qu'**une prescription d'association est lue dans une mémoire, et à partir de la position de réglage déterminée et/ou de la modification temporelle de cette position de réglage, on détermine au moyen de la prescription d'association un paramètre de commande d'entraînement (PWM) pour la commande de l'entraînement, en dépendance de ce paramètre.

6. Procédé selon l'une des revendications précédentes, **caractérisé en ce qu'**une direction de mouvement et/ou une vitesse de mouvement et/ou une accélération de mouvement du premier entraînement de réglage est associée à une position de réglage et/ou à une modification temporelle de la position de réglage du second entraînement.

7. Procédé selon l'une des revendications précédentes, **caractérisé en ce que** le dispositif de réglage lombaire comprend un troisième entraînement pour un réglage dans une troisième direction de réglage qui se distingue de la première et de la seconde direction de réglage, et le mouvement d'entraînement du troisième entraînement est commandé en fonction de la position de réglage et/ou de la modification temporelle de la position de réglage de la première direction de réglage et/ou de la seconde direction de réglage.

8. Procédé selon l'une des revendications précédentes, **caractérisé en ce que** le mouvement d'entraînement dans la première direction de réglage et le mouvement d'entraînement dans la seconde direction de réglage forment un motif de massage qui est appliqué pendant une période temporelle prédéterminée.

9. Procédé selon la revendication 8, **caractérisé en ce que** le motif de massage est modifié en fonction d'un ou de plusieurs paramètres caractéristiques, en particulier en fonction de
- un poids assis,
- un temps de massage,
- un temps de circulation,
- une vitesse du véhicule et sa modification temporelle,
- une fréquence et un degré d'un actionnement du volant,
- un trajet d'actionnement d'accélérateur,
- un actionnement de la pédale d'embrayage,
- une reconnaissance de trajet sur mauvaise chaussée,
- une température du véhicule,
- une identification d'utilisateur,
- un actionnement d'un dispositif d'actionnement.

10. Procédé selon l'une des revendications précédentes, **caractérisé en ce que** la force agissant sur l'entraînement est déterminée à partir d'au moins un mouvement d'entraînement.

11. Procédé selon la revendication 10, **caractérisé en ce qu'**un contour du dos de l'utilisateur du siège est déterminé à partir de la détermination de la force agissant sur l'entraînement.

12. Procédé selon la revendication 11, **caractérisé en ce qu'**une position de réglage spécifique au contour et/ou un motif de massage spécifique au contour et/ou une durée de massage temporelle prédéfinie spécifique au contour est déterminée à partir du contour du dos.

13. Procédé pour commander un dispositif de réglage lombaire d'un siège de véhicule automobile, en particulier selon l'une des revendications précédentes, dans lequel le dispositif de réglage lombaire comprend :
- un premier entraînement pour un réglage dans une première direction de réglage, et
- un second entraînement pour un réglage dans une seconde direction de réglage,
les directions de réglage se distinguant l'une de l'autre,
**caractérisé en ce que** :
la première ou la seconde direction de réglage se trouve dans le plan du dossier, l'appui lombaire est réglé suivant cette direction pour un fonctionnement de massage, du fait que le mouvement de réglage est commandé dans cette direction en fonction des valeurs mesurées de la position.

14. Dispositif de commande prévu pour commander un dispositif de réglage lombaire selon l'une des revendications précédentes, qui comprend les éléments suivants :
- une unité de calcul pour mettre en oeuvre le procédé selon l'une des revendications précédentes,
- des éléments pilotes pour commander l'énergie d'entraînement des entraînements,
- des capteurs pour déterminer la position de réglage et/ou la modification temporelle de la position de réglage, et/ou
- un dispositif de saisie.

15. Dispositif de commande selon la revendication 14, **caractérisé en ce que** l'unité de calcul est programmable et au moins un motif de massage est programmable et mémorisable.

16. Dispositif de commande selon la revendication 15, **caractérisé en ce que** plusieurs parmi les motifs de massage sont susceptibles d'être sélectionnés, modifiés et/ou mémorisés par l'utilisateur.

17. Dispositif de commande selon l'une des revendications 14 à 16, **caractérisé par** des moyens de transmission pour communiquer le fonctionnement de massage via un système de bus, en particulier via un bus LIN.

18. Dispositif pour actionner des fonctions d'un dispositif de réglage lombaire, comportant un ou plusieurs éléments de manipulation qui sont associés à :
- un réglage dans une première direction de réglage et dans une seconde direction de réglage, et à :
- une fonction de massage qui inclut un mouvement de réglage automatique dans la première direction de réglage et dans la seconde direction de réglage.

19. Système de siège de véhicule automobile, comportant
- un dispositif de réglage lombaire, l'appui lombaire étant réglable au moins vis-à-vis de la profondeur du dossier et de la hauteur du dossier, et
- un dispositif de commande selon l'une au moins des revendications 14 à 17.
